# EUROPEAN PATENT SPECIFICATION

(11) **EP 0 755 193 B1**
(45) Date of publication and mention of the grant of the patent: **16.07.2003**
(21) Application number: 95915209.1
(22) Date of filing: 06.04.1995
(51) Int. Cl.: A23D 9/06, A23L 3/3418

(54) **METHOD FOR EXTENDING THE LIFE TIME OF FAT USED IN DEEP FRYING**
VERFAHREN ZUR VERLÄNGERUNG DER FUNKTIONSLEBENSDAUER VON BRATFETT
METHODE DE PROLONGATION DE LA DUREE D'UTILISATION D'UN CORPS GRAS UTILISE POUR LA FRITURE

(30) Priority: 11.04.1994 FI 941617
(43) Date of publication of application: 29.01.1997
(73) Proprietor: AGA AKTIEBOLAG, 181 81 Lidingö (SE)
(72) Inventor: WASASTJERNA, Jan, FIN-02700 Grankulla (FI)
(74) Representative: LEITZINGER OY
(86) International application number: FI9500189
(87) International publication number: WO95027401

(56) References cited:
- EP-A- 0 339 491
- EP-A- 0 580 896
- WO-A-93/17567
- GB-A- 2 231 252
- J. SCI. FD AGRIC., Volume 26, 1975, MICHA PELED et al., "Effect of Water and BHT on Stability of Cottenseed Oil During Frying", pages 1663-1665.
- JOURNAL OF FOOD SCIENCE, Volume 51, No. 3, 1986, K. WARNER et al., "Storage Stability of Soybean Oil-Based Salad Dressings: Effects of Antioxidants and Hydrogenation".

## Description

The present invention relates to a method for extending the useful life of deep-frying fat.

The relatively fast deterioration of the quality of fat is restraining the useful life of edible oils, e.g. rapeseed oil in deep-drying. The deterioration depends partly on the crumbs which are loosening from the fried products and stay at the bottom of the deep-frying vessel, partly on the changes that occur in the fat through contact with oxygen of the atmosphere, such as increase of the free fat acids and lowering of the smoke point.

The most important deep-fried products are different bakery products, such as donuts and different pasties, meat products such as meat bolls and hamburger steaks, fish products, and deep-fried potatoe products. The products are steaked in the hot edible oil for a necessary time, wherein they are led on a conveyor belt through the frying fat as sinked therein. The in the fat sinked products are absorbing frying fat, fresh oil has hence been added to the frying vessel during the treatment. The steaking ovens are generally provided with an equipment which automatically adds fresh frying fat so that the amount of oil is sufficient.

By deep-frying, the temperature has to be adapted to the product which is to be produced, by frying of donuts the temperature shall be about 180 °C. If the temperature of fat is lower, the donuts absorb too much fat and are therefore not completely fried. Additionally, dough bits and fragments are spoiling the fat blend. A higher temperature leads to burning of donuts, and the burned material ends upp in the fat blend. The above mentioned drawbacks impair the fat quality, reduce its usability and useful life.

A low quality fat gives a qualitatively poor final result. Furthermore, the cleaning and maintaining of the apparatus and the used vessels is more difficult. After ending the frying the fat is pumped to a vessel, e.g. overnight in order to make the cleaning of the frying vessel possible. Low quality fat leaves fat depositions and rests on the walls and bottom of the vessel. These rests make the cleaning more difficult and delay it considerably. Additionally, the contaminated fat is getting spoiled considerably faster.

The object of the present invention is to provide a method, wherein the useful life of the frying fat can be extended considerably while avoiding the above mentioned drawbacks. The invention is characterized in that to the fat used in deep-frying nitrogen, is led. In order to get as even distribution of gas as possible and as effective gas measuring of the fat as possible, the gas is led to the fat in a finely dispersed form.

In a preferred embodiment of the invention a gas is led continuously to the hot fat mixture during frying.

After frying the used fat is led to a storing vessel for storage e.g. overnight. In order to prevent a considerable deterioration of fat quality during the storage, a minor amount of nitrogen is led over the fat in the vessel or into the fat. The deep-frying device and the other equipment is cleaned during this break in the method.

Preferably the gas is led into the fat stream, which is fed into the deep-frying vessel during the frying, on the pressure side of the fat pump. Depending on the product which is treated the feeding can be carried out continuously or not continuously in suitable portions.

In the following, a method is described wherein the present invention is exploited by supplying the deep-frying fat with nitrogen gas. By way of comparison the method has also been carried out without supplying nitrogen.

The method is carried out on a meat pasty line, wherein the volume of the deep-frying tank is about 2 m³ (the volum of a typical industral deep-frying tank is about 1,5 - 2,5 m³). Several tests were carried out one after the other in order to be able to compare the result which has been obtained from the different flows. The purpose of the test was to map out how much the useful life of the frying fat can be extended by means of gas inerting. Thus as comparison a deep-frying fat was used, which wasn't supplied with nitrogen at all during the test, i.e., it's a question of a normally used deep-frying method.

During the method, the quality of the fat was controlled among other things by measuring the amount of the free fat acids (FFA) formed. There exist no criteria for high or low quality fats, but a general recommendation is that if FFA is 2 and the smoke point of the fat is 180°C, the fat shouldn't be used for frying purposes any more.

Frying- or deep-frying fat is pumped in the usual manner to the deep-frying vessel from a storage vessel. The inside of the supplying pipe has been supplied on the pressure side of the pump with one ore more nozzles, with have been connected to a nitrogen source. The nozzle can be constituted of a sintered body or a perforated tubular unit, wherein the diameter of the fine openings is about 5 µm. In the reference tests the fat blend was not supplied with nitrogen. During the deep-frying fresh fat was continuously supplied to the frying vessel so that the fat level in the vessel remained rather unchanged. A fat addition is necessary, because the products absorb a certain amount of fat during the frying.

The following results were obtained in the. tests which were carried out.

| | N₂-flow | Night flow | Test | FFA |
|---|---|---|---|---|
| | m³/h | m³/h | period | |
| Ref. | 0 | 0 | 8 ad | 1,87 |
| 1. | 10 m³/h | 2 m³/h | 29 ad | 1,5 |
| | | | (1 ad=1,5 as) | |
| | | | 1085,25 h | |
| | | | | |
| 2. | 5 m³/h | 2 m³/h | 18 ad | 1,57 |
| | | | (1 ad=1 as) | |
| | | | 583,9 h | |
| | | | | |
| 3. | 5 m³/h | 2 m³/h | 14 ad | 1,8 |
| | | | (1 ad=2 as) | |
| | | | 416,4 h | |
| | | | | |
| 4. | 5 m³/h | 2 m³ | 21 ad | 1,71 |
| | | 1 hour | (1 ad=2 as) | |
| | | after | 848 h | |
| | | pumping over | | |
| ad = working-day | | | | |
| as = work shift | | | | |

From the results in the table it is evident that nitrogen supply clearly extends the useful life of the fat by deep-frying, i.e. the quality of the fat falls off markedly slower than by the reference test. In the method where no nitrogen was supplied, the quality of the fat thus fell off in 8 days (1 working-day = 1,5 work shift), whereafter the fat had to be changed, because the FFA value approaches the limit value of 2.

The test 1 demonstrates, that by a nitrogen amount of 10 m³/h, the FFA limit value hasn't been reached yet after 29 days. Accordingly the fat was still completely usable after such a long utilization.

In test 2, the nitrogen flow has been reduced to 5 m³/h, and the test was carried out for 18 days, and during one work shift daily. At the end of the test the quality of the fat was still fully acceptable.

The test 3 was carried out with the same nitrogen flow as test 2, but one working-day consisted of two work shifts. The fat consumption is hence greater, but approximately of the same order of magnitude as test 2.

In test 4 the nitrogen flow was again the same as in the two previous tests, even here two skifts were run per day. By the storage, nitrogen was supplied to the reservoir vessel only during one hour after the pumping over of the fat. The test result demonstrates that the quality of the fat is acceptable also after such a long use.

The results obtained show that with the method according to the present invention, a very satisfactory result is reached regarding the quality of the deep-frying fat during a long-term use. Hence the fat can be used during a considerably longer time than by customary deep-frying methods. Not only a reduction in the necessary fat amount is reaches but also the cleaning of the frying device and tools is easier.

In the following method, inerting tests are carried out on a fish ball line. The volum of the frying vessel contains 35 litres of a deep-frying fat. The deep-frying fat is normally exhanged once a week. During the deep-frying process, the fried products are absorbing oil. In order to keep an even oil level in the deep-frying vessel, the deep-frying vessel is supplied continuously with 33 litres of fresh oil per day. The deep-frying is carried out for 7,5 hours/day, 5 days a week.

Two deep-frying vessels with identical process conditions are used in the method. The oil in the other of the deep-frying vessels is inerted with nitrogen (B1), while the other the deep-frying vessel is used as a reference, i.e. the deep-frying is carried out in a normal deep-frying method (B3).

After the day shift oil (B1) is pumped over from the deep-frying vessel to a special vessel. The vessel holds 35-40 litres of oil, and it is provided with a pipe and a nozzle which have been connected to a nitrogen source. The nozzle consists of a perforated tubular unit, in which the diameter of the fine openings are about 5 µm. In the vessel the oil is inerted during 2 hours with 5 litres of nitrogen per minute, thereafter with 2 litres of nitrogen per minute during 10 hours (night storage).

The quality of the fat is controlled by measuring the free fatty acids (FFA) and the peroxide number of the fat, before and after the daily production.

From the result and the following graph it is evident that the nitrogen supply extends the useful life of the oil. In oil supplied with nitrogen as above, the useful life is at least twice as long as in the reference test.

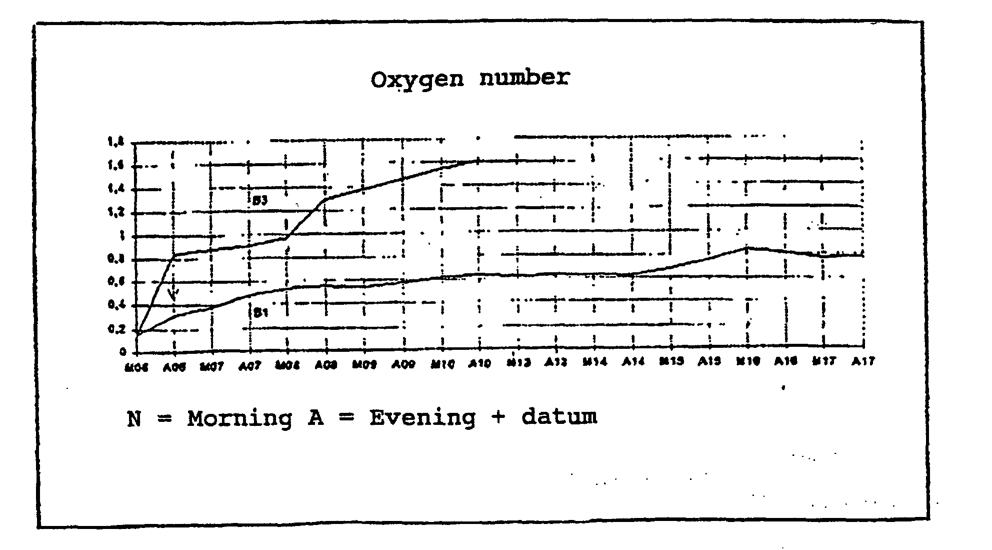

## Claims

1. A method for extending the useable time of deep-frying fat by treating the fat with nitrogen gas, **characterized in that** at least during the frying process said gas in finely divided form is led evenly distributed into the fat in a deep frying tank, into which fat the products to be fried are immersed.

2. The method of claim 1, **characterized in that** the gas is fed continuously into the hot fat.

3. The method of claim 1, **characterized in that** the gas is fed intermittently into the hot fat.

4. The method of claim 1, **characterized in that** between the frying sets the fat is fed to a collecting vessel, wherein gas is fed to the vessel and/or into the fat in the vessel.

5. The method of any of the previous claims, **characterized in that** the gas is supplied to the stream of frying fat, which is fed into the frying vessel, to the pressure side of the feeding pump.

6. The method of claim 5, **characterized in that** the gas is fed into the fat stream through one or more nozzles.

7. The method of claim 5 and 6, **characterized in that** the nozzle(s) is/are arranged into the oil feeding pipe from the feeding pump.

8. The method of claim 6 or 7, **characterized in that** the nozzle is a sintered body or a tubular unit with perforated walls.

9. The method of claim 8, **characterized in that** the perforation consists of an aperture with a diameter of the order of magnitude of 5 gm.

## Patentansprüche

1. Verfahren zur Verlängerung der nutzbaren Zeit von Frittierfett durch Behandlung des Fettes mit Stickstoffgas, **dadurch gekennzeichnet, dass** wenigstens während des Frittierverfahrens das Gas in feinverteilter Form gleichmäßig verteilt in das Fett in einem Frittierbehälter geleitet wird, wobei in dieses Fett die zu frittierenden Erzeugnisse eingetaucht werden.

2. Verfahren nach Anspruch 1, **dadurch gekennzeichnet, dass** das Gas kontinuierlich in das heiße Fett eingebracht wird.

3. Verfahren nach Anspruch 1, **dadurch gekennzeichnet, dass** das Gas diskontinuierlich in das heiße Fett eingebracht wird.

4. Verfahren nach Anspruch 1, **dadurch gekennzeichnet, dass** zwischen den Frittiersets das Fett in einen Sammelbehälter eingebracht wird, worin das Gas in den Behälter und/oder in das Fett in dem Behälter eingebracht wird.

5. Verfahren nach einem der vorhergehenden Ansprüche, **dadurch gekennzeichnet, dass** das Gas dem Strom des Frittierfetts, welches in den Frittierbehälter eingebracht wird, über der Druckseite der Zuführpumpe eingebracht wird.

6. Verfahren nach Anspruch 5, **dadurch gekennzeichnet, dass** das Gas in den Fettstrom durch eine und/oder mehrere Düsen eingebracht wird.

7. Verfahren nach Anspruch 5 und 6, **dadurch gekennzeichnet, dass** die Düse(n) in dem Ölzuführrohr der Zuführpumpe angeordnet ist/sind.

8. Verfahren nach Anspruch 6 oder 7, **dadurch gekennzeichnet, dass** die Düse ein Sinterkörper oder eine röhrenförmige Einheit mit perforierten Wänden ist.

9. Verfahren nach Anspruch 8, **dadurch gekennzeichnet, dass** die Perforierung aus einer Apertur mit einem Durchmesser in der Größenordnung von 5 µm besteht.

## Revendications

1. Procédé pour prolonger le temps d'usage d'une graisse de friture par traitement de la graisse avec du gaz azote, **caractérisé en ce qu'**au moins au cours du procédé de friture, ledit gaz sous forme finement divisée est acheminé en distribution uniforme dans la graisse d'une cuve de friture, dans laquelle les produits à frire sont immergés.

2. Procédé selon la revendication 1, **caractérisé en ce que** le gaz est acheminé en continu dans la graisse brûlante.

3. Procédé selon la revendication 1, **caractérisé en ce que** le gaz est acheminé par intermittence dans la graisse brûlante.

4. Procédé selon la revendication 1, **caractérisé en ce qu'**entre les séries de friture, la graisse est acheminée à une cuve collectrice, du gaz étant acheminé à la cuve et/ou dans la graisse de la cuve.

5. Procédé selon l'une quelconque des revendications précédentes, dans lequel le gaz est délivré au flux de graisse de friture, qui est acheminé dans la cuve de friture, du côté pression de la pompe d'alimentation.

6. Procédé selon la revendication 5, **caractérisé en ce que** le gaz est acheminé dans le flux de graisse par une ou plusieurs buses.

7. Procédé selon les revendications 5 et 6, **caractérisé en ce que** la ou les buses est/sont aménagées dans le tube d'alimentation en huile provenant de la pompe d'alimentation.

8. Procédé selon la revendication 6 ou 7, **caractérisé en ce que** la buse est un corps fritté ou une unité tubulaire à parois perforées.

9. Procédé selon la revendication 8, **caractérisé en ce que** la perforation consiste en une ouverture d'un diamètre d'un ordre de grandeur de 5 mm.
